# EUROPEAN PATENT APPLICATION

(11) **EP 4 273 352 A1**
(43) Date of publication of application: **08.11.2023**
(21) Application number: 23170760.5
(22) Date of filing: 28.04.2023
(51) Int. Cl.: E04H 1/12

(54) **GAS STATION CANOPY**

(30) Priority: 27.04.2022 US 202263363663 P
(71) Applicant: Cavitte, Yoann, Sainte-Julie, Québec J3E 3H8 (CA)
(72) Inventor: Cavitte, Yoann, Sainte-Julie, Québec J3E 3H8 (CA)
(74) Representative: Plasseraud IP

(57) **Abstract**

A gas station canopy located on a lower level of an elevated building and adapted to protect the elevated building from fire originating under the canopy is provided. The canopy comprises columns supporting a roof section. The columns and the roof section are made of a material having a fire resistance rating of at least 2h. A fire protection system supplied from the elevated building towards the roof section deluge sprinkle a foam fire extinguishing substance under the canopy. An upwardly vertical ledge at an outer edge of the roof section blocks fire and smoke from contacting the elevated building; the ledge being horizontally offset from the elevated building.

## Description

### CROSS-REFERENCE TO RELATED APPLICATIONS

There are no cross-related applications.

### FIELD OF THE INVENTION

The present invention generally relates to gas station canopies, more specifically to gas station canopy infrastructure.

### BACKGROUND OF THE INVENTION

Gas and petroleum stations, referred to as gas stations, usually comprise a designated area wherein a plurality of pumps are located and from which users may buy and collect gas or other petroleum products for their vehicle. A canopy is generally located over the designated area to act as a physical barrier for the users, the vehicles and the pumps from the environment, such as rain, sun, wind, etc. A canopy is usually made of steel and consists of a plurality of beams supporting a flat roof. Canopies may also be convenient and increase the safety of users by having lights under the roof to illuminate the designated area. Understandably, the canopies are generally built and designed as architectural pieces rather than structural pieces. Accordingly, the fire protection systems are very limited and are not adapted to protect adjacent buildings. Generally, the gas station canopies are located at a given distance from adjacent buildings for safety reasons.

Moreso, since designated areas take a significant amount of space for receiving multiple pumping stations and for allowing both fluid displacement of vehicles and sufficient parking space of said vehicles, the implementation of gas station canopies in dense urban areas is often problematic due to the lack of available space and the associated price per square feet of said space. A solution for implementing gas station canopies in urban areas is to allow the construction of commercial or residential buildings next to and over the canopies in order to optimize the space available. However, the current canopies are not designed to support the weight of an elevated building and to provide sufficient fire protection to said building. Furthermore, having buildings over the canopies would require further security mechanisms that are not needed with conventional canopies.

Accordingly, there is a need for a gas station canopy adapted to support an elevated building and that comprises fire protection systems accordingly.

### SUMMARY OF THE INVENTION

The shortcomings of the prior art are generally mitigated by providing a gas station canopy configured to be disposed under a building, the canopy covering a lower surface area and comprising: one or more supporting elements anchored in the lower surface; a roof section supported by the one or more supporting elements and secured to the one or more supporting elements at a first upper location; and a fire protection system having tubes in the elevated building and sprinklers in the roof section for sprinkling a fire extinguishing substance; wherein, the elevated building is supported by the one or more supporting elements and is secured to the one or more supporting elements at a second upper location, the second upper location being higher than the first upper location. The sprinklers may be a deluge sprinkling system. The fire extinguishing substance may be a foam substance. The one or more supporting elements and the roof section may be made of material having a fire resistance rating of at least 2h. The gas station canopy may further comprise an upwardly vertical ledge at an outer edge of the roof section, the upwardly vertical ledge being horizontally offset from the elevated building. The offset may be around 1 meter.

Other and further aspects and advantages of the present invention will be obvious upon an understanding of the illustrative embodiments about to be described or will be indicated in the appended claims, and various advantages not referred to herein will occur to one skilled in the art upon employment of the invention in practice.

### BRIEF DESCRIPTION OF THE DRAWINGS

The above and other aspects, features and advantages of the invention will become more readily apparent from the following description, reference being made to the accompanying drawings in which:
FIG. 1 is a cross sectional front view of a gas station canopy of the prior art.
FIG. 2 is a cross sectional side view of the prior art gas station canopy of FIG. 1.
FIG. 3 is a top plan view of an embodiment of a gas station canopy in accordance with the principles of the present invention.
FIG. 4 is a cross sectional view of the gas station canopy of FIG. 3.
FIG. 5 is a side elevation view of a gas station canopy under a plurality of elevated building floors in accordance with the principles of the present invention.

### DETAILED DESCRIPTION OF THE INVENTION

A novel **gas station canopy** will be described hereinafter. Although the invention is described in terms of specific illustrative embodiments, it is to be understood that the embodiments described herein are by way of example only and that the scope of the invention is not intended to be limited thereby. For example, the use of the term "gas" may be interchanged with the word "petroleum" and vice-versa.

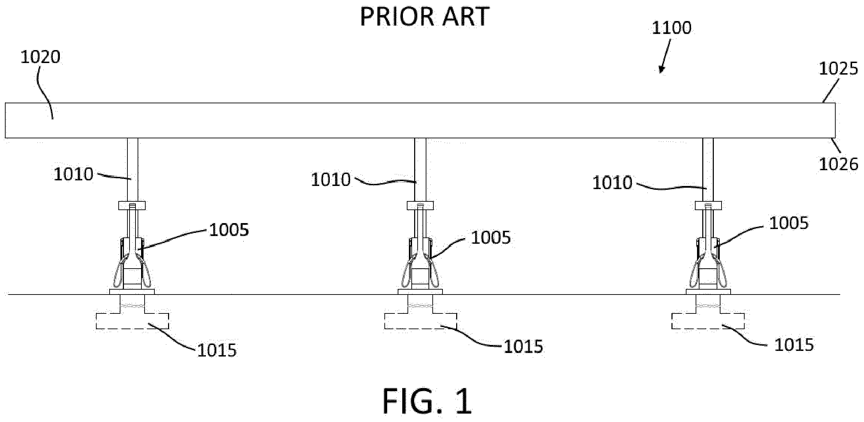

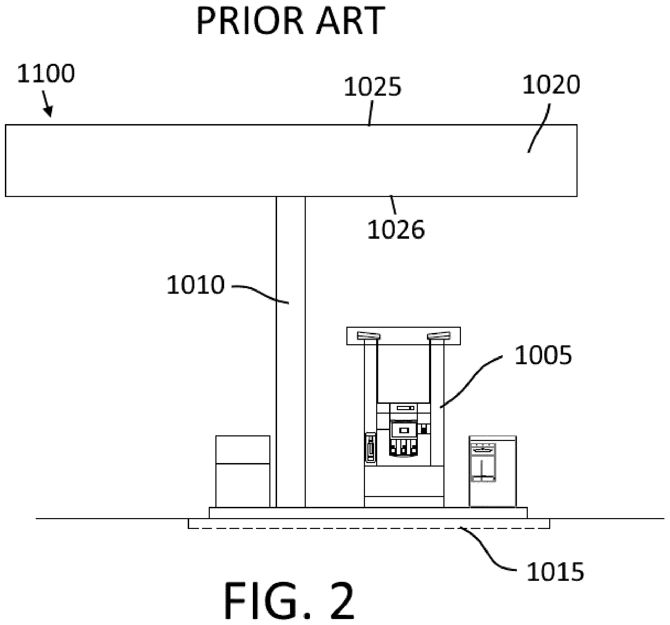

Referring to FIGS. 1 and 2, a gas station canopy 1100, also referred to as canopy, of the prior art is shown. The canopy 1100 comprises columns 1010 anchored 1015 in the ground supporting a roof section 1020. The roof section 1020 is substantially flat, comprises a top surface 1025 and a bottom surface 1026 and covers gas pumps 1005 located next to the columns 1010. The roof section 1020 may further drain water along the extremities of the section 1020. The canopy's structure is generally of steel beams that are then covered by panels which may be made of various materials such as steel, aluminum or gypsum. Understandably, the canopy 1100 of the prior art is configured to protect the pumps 1005, users and vehicles from environmental effects such as rain and sun. The canopy 1100 of the prior art is not configured to support a building on top of it, nor is it configured to protect said building from fire.

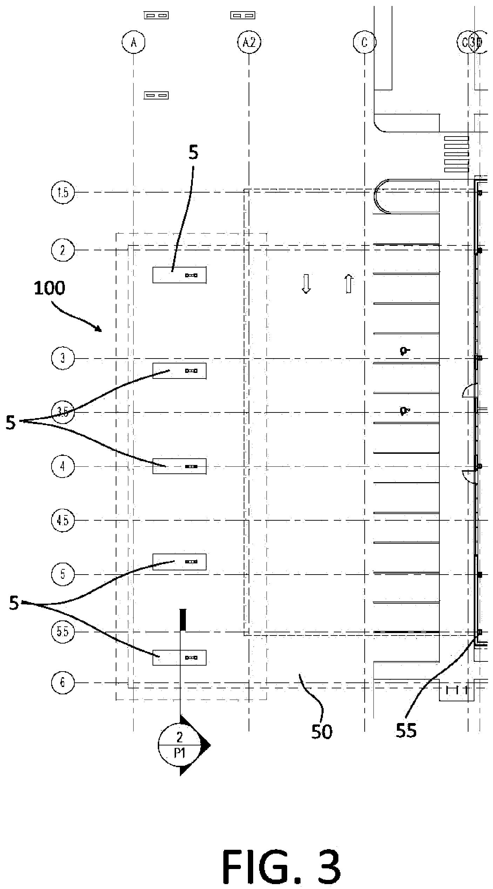

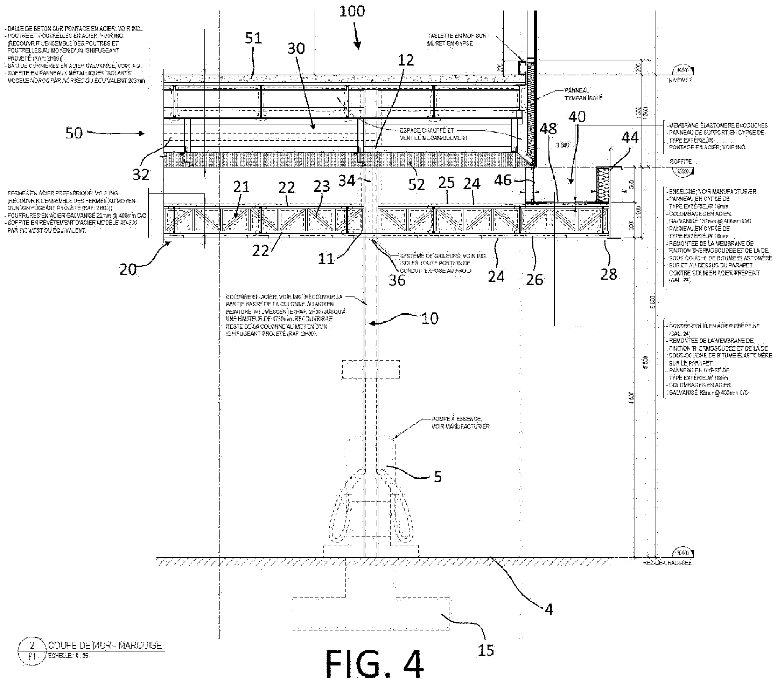

Referring now to FIG. 3, a top plan view of an embodiment of a gas station canopy 100 in accordance with the invention is shown. The gas station canopy 100 houses a plurality of gas pumps 5 and is located under an elevated building 50. Referring now to FIG. 4, a side sectional view of the gas station canopy 100 is shown. The canopy 100 comprises a supporting element 10 and a roof section 20 covering a predetermined ground surface area 4. The supporting element 10 may be an elongated vertical beam or column anchored 15 in the ground and is usually located next to a gas pump 5. The number of columns 10 under a canopy 100 may vary depending on their dimensions, physical characteristics and on the required weight to support. The columns 10 may be secured to the ground surface by any anchoring means 15 know in the art. Understandably, in other embodiments, the quantity and location of gas pumps 5 under a canopy 100 may vary. Furthermore, the surface area 4 may be the ground may be any other surface and volume of space that may support the canopy 100. For example, in other embodiments, the ground may instead be a structure or a building.

At a first upper section 11 of the columns 10 is secured the roof section 20. The roof section 20 may be a substantially flat section comprising a plurality of structural beams 21. In the embodiment shown, the roof section 20 is a truss structure comprising parallel horizontal beams 22 further supported by intermediary angled beams 23. It may be understood that in other embodiments, any other arrangement of truss structure may be used. The truss structure 21 of the roof section 20 may be covered by panels and soffits 24. The panels and soffits 24 may be made of aluminum, gypsum, etc. The panels and soffits 24 may also be used for receiving visual information such as ads or branding.

At a second upper section 12 of the columns 10 located over the first upper section 11 is secured an elevated building 50. The elevated building 50 may be any building type know in the art, such as a commercial or a residential building. In the embodiment shown, the elevated building 50 comprises a concrete slab 51 supported by a steel decking 52 which are both secured to the columns 10. The height of the columns 10, and the distance between the first 11 and second 12 upper sections may be any height and distance known in the art.

It may be appreciated that the gas station canopy 100 may be adjacent to a building 55 resting on the ground on one or multiple sides of the canopy 100. As seen in FIG. 3, the canopy 100 is secured to a building 55 located on the right side of the view. The same building 55 is not shown in FIG. 4; however, it is located on the left side of the canopy 100. Accordingly, both the roof section 20 and the elevated building 50 may be secured to or may be a continuation of the adjacent building 55. The roof section 20 and the elevated building 50 may thus share various systems with the adjacent building 55. For example, power components may originate from the adjacent building to power devices or systems in the roof section or in the elevated building. Heating and ventilation system may also originate from the adjacent building 55 towards the elevated building 50 or the canopy 100. In yet other embodiments, the building 50 may not be supported by the column 10. The column 10 may then be only architecturally linked to the building 50 in some embodiments and may not touch the building 50 in other embodiments. In embodiments wherein the columns 10 do not or only partly support the building 50, the floor of the building 50 overlapping the canopy may be cantilevered or may be otherwise supported by the adjacent building 55 or by any other supporting means known in the art.

In further embodiments, the roof section 20 may only be supported by the adjacent building 55 or by any other means known in the art, in which cases there may not be a supporting element 10 and anchoring means 15.

In an embodiment of the invention, the top surface 25 of the canopy 100 is configured to be waterproof. Panels 24 on the top surface 25 of the canopy 100 may be covered by a waterproof spray and waterproof sealant may seal the junctions between adjacent panels 24. Drain lines, not shown, may further be found on the top surface 25 to guide water away from the predetermined ground area 4 and from the adjacent building 55. Therefore, the users, pumps 5 and vehicles located in the predetermined ground area 4 may be protected from water falling substantially vertically from the sky or from the elevated building 50.

Still referring to FIG. 4, the gas station canopy 100 may comprise a fire protection system 30. The fire protection system 30 is configured to slow down the propagation or extinguish fire under the canopy 100. In the shown embodiment, the fire protection system 30 is a vertical duct or tube system 32 in fluid communication with the building adjacent to the canopy 55. The fire protection system 30 may cover part or the entire horizontal area of the foundation of the elevated building 50. Vertical tubes 34 of the fire protection system 30 may go down from the elevated building 50 to reach the roof section 20 of the canopy 100. The vertical tubes 34 may be found within the columns 10 or may be secured next to the columns 10. The tubes (32, 34) of the fire protection system 30 may be covered by heat isolating material, not shown, to prevent freezing of the fire extinguishing substance found within. The vertical tubes 34 may reach the bottom surface 26 of the roof section 20 and may be in fluid communication with sprinklers 36 facing the predetermined ground surface area 4. Understandably, in the case of a fire, the sprinklers 36 may sprinkle a fire extinguishing substance over the ground area 4 under the canopy 100, over the gas pumps 5 and over the vehicles present. The quantity of sprinklers 36 and their location may vary depending on the required ground surface 4 to cover and based on the specification of each sprinkler 36 and sprinkled substance.

In an embodiment of the invention, the fire protection system 30 is a deluge system sprinkling a foam-water solution. In yet another embodiment of the invention, the fire protection system 30 is a deluge system sprinkling a foam solution. The fire protection system 30 may be activated in any way known in the art, such as with heat detection. Accordingly, the gas station canopy 100 may comprise various sensors, not shown, for detecting emergencies. For example, heat or smoke sensors may be used. The sensors may be located anywhere on the canopy 100 or on the pumps 5.

The fire protection system 30 may be in communication with an alarm system, not shown. When the fire protection system 30 is activated, the alarm system located in the building adjacent to the canopy 55 and in the elevated building 50 may alarm people of danger. The alarm system may also be in communication with emergency services such as with firefighters.

The fire protection system 30 may further be in communication with the gas pumping system, not shown, supplying the gas pumps 5. The gas pumping system may therefore cut any power supply to the gas pumps 5 to prevent any additional pumping of gas. It may be appreciated that having a building next to and over the canopy 100 allows for the installation of the fire protection system 30 in the canopy 100 without having to install said system 30 in the ground wherein space may be limited or restricted. Accordingly, there is no compromise of space for the fire protection system 30 under ground that may otherwise be allocated for the gas pumping system.

Further with the aim of protecting the elevated 50 and adjacent 55 buildings, the structural elements from the supporting elements 10, from the roof section 20 and from the elevated building 50 may be made of an assembly of materials having a fire resistance rating of at least 2h. The fire resistance rating of 2h may be obtained by a combination of materials for each of the elements of the canopy 100. For example, the structural elements of the columns 10 may be a combination of two materials each having a fire resistance rating of 1h, resulting in a total of 2h. Understandably, any other combination of materials having the same or different fire resistance rating may be used to obtain the at least 2h. The structural elements may be the columns 10 and the beams of the truss system 21. By having a fire resistance rating of at least 2h, the fire resistance capabilities of the structural elements may allow people in the buildings (50, 55) to evacuate in time and for emergency personnel to arrive before any substantial structural damage is done to the canopy 100 and possibly to the buildings (50, 55). In yet another embodiment of the invention, every component of the canopy 100 is made of a material with a fire resistance rating of at least 2h.

Still referring to FIG. 4, the outer edge 28 of the roof section 20 may be horizontally offset 40 from the elevated building 50 by a given distance. The offset 40 may prevent, or at least reduce, the possibility of flames and smoke coming from under the canopy 100 to substantially enter in contact with the elevated building 50. In an embodiment of the invention, the offset distance 40 is preferably of 1 meter plus or minus 10%. Understandably, the offset 40 of other embodiments may be of any other acceptable value under or over 1 meter. Further providing protection against fire to the elevated building is a substantially upwardly vertical ledge 44. The ledge 44 may be located at the edge 28 of the roof section 20 wherein no building is adjacent. The ledge 44 is an elongated section that may physically block fire or smoke from going towards the elevated building 50. Understandably, just like the structural elements of the canopy 100, the ledge 44 may be made of one or more material(s) having a combined 2h fire resistance rating and over.

To prevent water, humidity or unwanted particles from accumulating between the elevated building 50 and the roof section 20 of the canopy, a counter-flashing element 46 may be installed on the canopy 100. The counter-flashing element 46 may substantially hermetically seal the opening between the elevated building 50 and the top surface 25 of the roof section 20. To further protect the roof section 20 of the canopy from water or other unwanted particles, a protective membrane 48 may be laid over the top section 20 between the counter-flashing element 46 and the ledge 44. The protective membrane 48 may be a bi-layered elastomeric membrane; however, it may also be any other protective material known in the art.

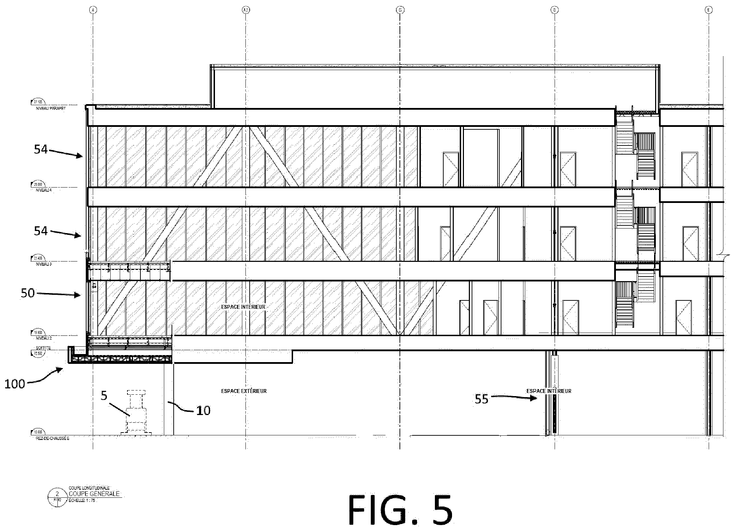

Referring now to FIG. 5, another embodiment of the gas station canopy 100 is shown. It may be appreciated that the elevated building 50 may comprise a plurality of floors 54 over the canopy 100. Understandably, the components or structural components of the floors 54 over the canopy 100 may also have a fire resistance rating of 2h. The adjacent building 55 may be offset from the canopy 100 at a given distance, even though the elevated building 50 is found over said canopy 100.

While illustrative and presently preferred embodiments of the invention have been described in detail hereinabove, it is to be understood that the inventive concepts may be otherwise variously embodied and employed and that the appended claims are intended to be construed to include such variations except insofar as limited by the prior art.

## Claims

1. A gas station canopy configured to be disposed within or under a building having a first level and a second level located above the first level, the canopy covering a surface area of the first level and comprising:
one or more supporting elements secured to the first level surface;
a roof section supported by the one or more supporting elements and secured to the one or more supporting elements at a first upper location above the first level surface; and
a fire protection system having tubes in the building and sprinklers in the roof section for sprinkling a fire extinguishing substance.

2. The gas station canopy of claim 1, wherein, the building is supported by the one or more supporting elements and is secured to the one or more supporting elements at a second upper location, the second upper location being higher than the first upper location.

3. The gas station canopy of claim 1, the sprinklers being a deluge sprinkling system.

4. The gas station canopy of claim 1, the fire extinguishing substance being a foam substance.

5. The gas station canopy of claim 1, the one or more supporting elements and the roof section being made of one or more materials having a combined fire resistance rating of at least 2h.

6. The gas station canopy of claim 1, comprising an upwardly vertical ledge at an outer edge of the roof section, the upwardly vertical ledge being horizontally offset from the building.

7. The gas station canopy of claim 5, the offset being of 1 meter plus or minus 10%.
